# FASCICULE DE BREVET EUROPEEN

(11) **EP 0 401 067 B1**
(45) Date de publication et mention de la délivrance du brevet: **30.11.1994**
(21) Numéro de dépôt: 90401215.0
(22) Date de dépôt: 07.05.1990
(51) Int. Cl.: H02P 7/00

(54) **Dispositif d'excitation pour actionneur électromagnétique**
Ansteuervorrichtung für einen elektromagnetischen Schalter
Excitation device for electromagnetic actuator

(30) Priorité: 30.05.1989 FR 8907083
(43) Date de publication de la demande: 05.12.1990
(73) Titulaire: THOMSON TUBES ELECTRONIQUES, 92100 Boulogne-Billancourt (FR)
(72) Inventeur: Vermersch, Alain, F-92045 Paris la Défense (FR)
(74) Mandataire: Guérin, Michel

(56) Documents cités:
- EP-A- 0 291 803
- US-A- 4 703 238

## Description

La présente invention se rapporte à un dispositif d'excitation électrique du ou des bobinages d'un actionneur électromagnétique, en particulier d'un actionneur électromagnétique à déplacement linéaire.

Les bobinages électromagnétiques à déplacement linéaire trouvent un nombre d'applications importantes dans le domaine des actionneurs de commande les plus divers : gâches électriques, électro-aimants à noyau mobile, moteurs de hauts-parleurs, moteurs linéaires pour mécanismes asservis, dispositifs de commande du piston d'accord d'une cavité résonnante hyperfréquence, etc...

Il est connu par le brevet US-A-4 703 238 et le brevet EP-A-291 803 d'utiliser un pont de semi-conducteurs pour commander le courant dans une charge (notamment dans un moteur) mais ces semi-conducteurs ne sont utilisés qu'en régime de commutation.

Il est connu de réaliser l'excitation électrique de puissance du bobinage d'un moteur linéaire électromagnétique au moyen d'un pont de transistors de puissance dont les électrodes de commande (grilles dans le cas de transistors à effet de champ, bases dans le cas de transistors bipolaires) sont attaquées par l'intermédiaire d'un amplificateur à découpage et à modulation de largeur d'impulsions. Lorsque la tension de consigne est nulle, ces électrodes de commande sont attaquées par des signaux découpés symétriquement (signaux carrés par exemple) de sorte que le courant moyen dans le bobinage est nul. Lorsque cette tension de consigne a une valeur, par exemple positive, tendant à faire déplacer le noyau de l'actionneur dans un premier sens, ces signaux sont découpés dissymétriquement dans un premier sens par le modulateur, de sorte que le courant moyen dans le bobinage a une certaine valeur, par exemple positive, qui dépend du degré de la modulation, c'est à dire en fait de l'amplitude de la tension d'erreur qui commande le modulateur. A contrario, lorsque cette même tension de consigne a une valeur, alors négative, tendant à faire déplacer ce noyau dans l'autre sens, ces mêmes signaux hachés sont découpés dissymétriquement dans l'autre sens, ce qui confère une valeur négative au courant moyen précité, traversant le bobinage de l'actionneur électromagnétique.

Un inconvénient de ce dispositif classique est le risque d'induction de tensions parasites dues à ce découpage de puissance à fréquence plus ou moins élevée. D'une manière générale, le noyau magnétique mobile est associé à un capteur de position qui intervient dans la boucle globale d'asservissement en position de ce noyau et dont l'électronique de traitement associée est souvent placée dans le même boîtier que celui de l'amplificateur de puissance précité, ce qui pose des problèmes d'antiparasitage d'autant plus aigüs que le signal délivré par ce capteur de position doit être aussi précis que possible.

En outre, en particulier dans le cas des moteurs linéaires à court temps de réponse, il est souhaitable d'utiliser des bobinages ayant un faible nombre de spires parcourues par un courant important, plutôt que des bobinages ayant un grand nombre de spires parcourues par un courant plus faible, de façon à optimiser les problèmes de dissipation thermique. Il s'ensuit que la self-induction du moteur linéaire a alors une faible valeur, de sorte que, lorsque la tension de consigne est nulle et que par suite les impulsions de tension successives en sortie du modulateur sont équilibrées dans les deux sens, le moteur, bien que mécaniquement immobile, voit ses bobinages parcourus par un courant alternatif dont la valeur efficace est loin d'être négligeable compte-tenu du trop faible amortissement dû à la faible self-inductance de ces bobinages. Une puissance électrique non négligeable est alors dissipée au repos dans ces bobinages.

Pour obtenir, au repos, un faible courant efficace dans les bobinages, il faudrait travailler avec une fréquence de découpage très élevée (de l'ordre de un à plusieurs Mégahertz), ce qui d'une part est incompatible avec un bon fonctionnement des transistors de puissance,et ce qui d'autre part ne résoud pas le problème d'antiparasitage précité.

L'invention vise à remédier à ces inconvénients. Elle se rapporte à cet effet à un dispositif d'excitation électrique d'au moins un bobinage d'un actionneur électromagnétique, apte à entraîner un déplacement dans un sens comme dans l'autre, ce dispositif comportant un pont de transistors de puissance qui est apte à alimenter directement ce ou ces bobinages dans un sens ou dans l'autre, ainsi qu'un dispositif apte à mesurer l'erreur entre une tension de consigne représentative du courant à appliquer à ce ou ces bobinages et une tension proportionnelle au courant qui les traverse. Des moyens sont prévus pour, lorsque cette tension d'erreur est positive, d'une part bloquer une première paire de transistors du pont qui, si elle conduisait, ferait passer dans un premier sens le courant dans ce ou ces bobinages, et d'autre part rendre entièrement passant un des transistors de la seconde paire tout en faisant fonctionner l'autre transistor de cette dernière paire en régime sensiblement linéaire, de sorte que le courant qui les traverse (et qui traverse par suite ce ou ces bobinages dans l'autre sens) varie alors pratiquement linéairement avec cette tension d'erreur, et vice-versa lorsque cette tension d'erreur est négative, auquel cas les deux transistors de cette seconde paire sont bloqués et les deux transistors de la première paire conduisent, l'un étant totalement passant et l'autre fonctionnant en régime linéaire, de sorte que le courant, qui traverse alors le ou les bobinages dans le dit premier sens, varie, cette fois encore, pratiquement, linéairement avec la tension d'erreur. Des moyens sont en outre prévus pour lorsque la tension d'erreur est nulle bloquer tous les transistors du pont de sorte qu'aucun courant ne passe dans le ou les bobinages.

Selon une forme avantageuse de réalisation, la tension d'erreur précitée est appliquée simultanément :
. à un premier interrupteur électronique, par exemple constitué par une diode, qui est connectée entre l'électrode de commande (base pour un transistor bipolaire, grille pour un transistor à effet de champ) d'un premier transistor de ladite "seconde paire" du pont et un potentiel (en général la masse, soit 0 volts) de blocage de ce même transistor, cet interrupteur étant commandé par le signe (+ ou -) de cette tension d'erreur pour être fermé, et alors bloquer ce transistor, lorsque cette tension d'erreur est d'un premier signe (par exemple -), et pour être ouvert dans le cas contraire afin de permettre à ce même transistor de fonctionner alors en régime essentiellement linéaire ;
. via un inverseur analogique, à un deuxième interrupteur électronique analogue au premier, ce deuxième interrupteur étant, de la même façon que le premier interrupteur, connecté entre l'électrode de commande (base ou grille) du premier transistor correspondant de la première paire du pont et un potentiel de blocage de ce même transistor, ce deuxième interrupteur étant commandé par le signe de cette tension d'erreur de façon inverse au premier interrupteur, c'est à dire pour être fermé, et alors bloquer ce transistor lorsque cette tension d'erreur est de l'autre signe (+ dans l'exemple précité), et pour être ouvert dans le cas contraire afin de permettre à ce même transistor de fonctionner alors en régime sensiblement linéaire ; et
. à un discriminateur de signe qui est commandé par le signe de cette tension d'erreur de manière à appliquer une tension de blocage au deuxième transistor de la paire dont l'autre transistor est rendu bloqué par cette tension d'erreur (via l'interrupteur électronique associé), et une tension de saturation au deuxième transistor de l'autre paire.

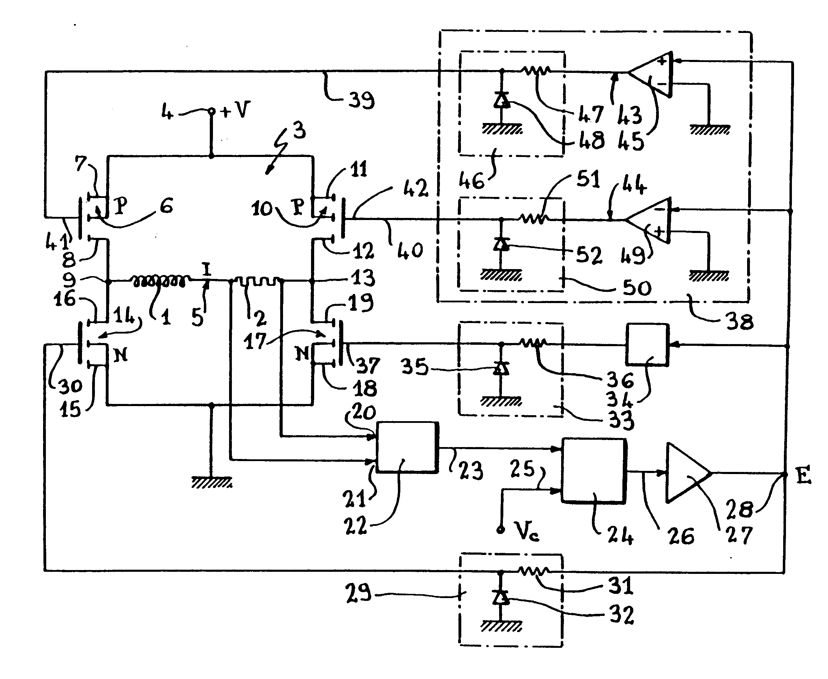

De toute façon, l'invention sera bien comprise, et ses avantages et autres caractéristiques ressortiront, lors de la description suivante d'un exemple non limitatif de réalisation, en référence à la figure unique annexée, qui est un schéma électrique simplifié d'un dispositif d'excitation électrique du bobinage d'un actionneur électromagnétique à déplacement linéaire dont le noyau est apte à se déplacer dans un sens comme dans l'autre.

En se reportant à cette figure unique, le bobinage de l'actionneur électromagnétique à déplacement linéaire est représenté par une self-inductance référencée 1 .

Ce bobinage est, de manière connue en soi, placé en série avec une résistance de mesure, de très faible valeur, dans la diagonale 5 d'un pont 3 de transistors de puissance, qui est alimenté entre la borne 4 d'alimentation continue +V et la masse, et qui comporte :
- un premier transistor de puissance 6 à effet de champ, ou FET, de type "canal P", dont la source 7 est connectée à la borne d'alimentation 4, et dont le drain 8 est connecté à une première extrémité 9 de la diagonale 5 du pont 3 ;
- un deuxième transistor FET 10, pratiquement identique au transistor 6, donc également de type "canal P", dont la source 11 est connectée à la borne d'alimentation 4, et dont le drain 12 est connecté à l'autre extrémité 13 de la diagonale 5 du pont de transistors 3 ;
- un troisième transistor FET de puissance 14, de type "canal N" et avantageusement complémentaire du transistor 10, dont la source 15 est reliée à la masse, et dont le drain 16 est connecté à l'extrémité 9 de la diagonale 5 du pont ; et
- un quatrième transistor FET de puissance 17, également de type "canal N", et avantageusement complémentaire du transistor 6, dont la source 18 est reliée à la masse, et dont le drain 19 est connecté à l'autre extrémité 13 de la diagonale 5 du pont 3.

Les deux bornes de la résistance de mesure 2 sont respectivement reliées aux deux entrées 20,21 d'un soustracteur analogique 22 qui fournit, sur son fil de sortie 23, une tension représentative de la différence de potentiel aux bornes de la résistance 2, et dont la valeur absolue est proportionnelle à celle du courant I qui traverse cette résistance de mesure 2, c'est à dire à celle du courant I qui traverse le bobinage 1 du moteur linéaire.

Cette tension sur le fil 23 est appliquée sur une première entrée d'un autre soustracteur analogique 24, dont l'autre entrée 25 reçoit la tension de consigne Vc qui est fournie par la boucle totale d'asservissement en position du noyau du moteur linéaire de bobinage 1.

La tension d'erreur en sortie 26 du soustracteur 24 est amplifiée dans un amplificateur analogique 27 de mise à niveau, dont elle sort au point 28 sous la référence E.

Conformément à l'invention, cette tension d'erreur E est appliquée :
- à un premier interrupteur électronique 29 qui est composé d'une résistance de protection 31 branchée entre le point 28 et la grille 30 du transistor 14, et d'une diode 32 montée en inverse entre cette grille 30 et la masse : cette diode est passante si la tension d'erreur E est négative, et elle est bloquée dans le cas contraire ; par suite, la grille 30 du transistor 14 est pratiquement mise à la masse si E est négative, et elle reçoit cette tension E à travers la résistance 31 dans le cas contraire ;
- à un deuxième interrupteur électronique 33 via un inverseur analogique 34 ; cet interrupteur 33 est identique à l'interrupteur 29, avec résistance série 36 et diode 35 montée en inverse entre la grille 37 du transistor 17 et la masse : compte tenu de la présence de l'inverseur 34, la diode 35 est passante si la tension d'erreur E est positive, et elle est bloquée dans le cas contraire ; par suite, la grille 37 du transistor 17 est pratiquement mise à la masse si la tension d'erreur E est positive, et elle reçoit cette tension E à travers la résistance 36 dans le cas contraire ; et
- à un "discriminateur de signe" 38 dont les deux sorties 39 et 40 sont respectivement reliées aux grilles 41 et 42 des transistors 6 et 10 et qui délivre, si sa tension d'entrée E est positive, une tension pratiquement égale à la tension d'alimentation +V sur sa sortie 39 et pratiquement la tension de masse sur sa sortie 40, et vice-versa si la tension E est négative.

En pratique, le discriminateur de signe 38 comporte deux branches indépendantes :
. une première branche 43 reliant le point 28 à la grille 41 du transistor 6 et comportant, en série, un amplificateur différentiel analogique 45, qui est alimenté par la tension +V et dont l'entrée (+) est reliée au point 28 tandis que l'entrée (-) est mise à la masse, et un interrupteur électronique 46 identique aux interrupteurs 29 et 33 précités, avec résistance série 47 et diode de mise à la masse éventuelle 48 ;
. une deuxième branche 44 reliant le point 28 à la grille 42 du transistor 10 et comportant, en série, un amplificateur différentiel analogique 49, qui est alimenté par la tension +V et dont l'entrée (-) est reliée au point 28 tandis que l'entrée (+) est mise à la masse, et un interrupteur électronique 50 identique aux interrupteurs 29, 33 et 46 précités avec résistance série 51 et diode de mise à la masse éventuelle 52.

Le fonctionnement du dispositif qui vient d'être décrit est le suivant :

Lorsque la position du noyau mobile de l'actionneur, ou moteur linéaire, doit être changée, la boucle globale d'asservissement comportant le capteur de position (non représenté) lié à ce noyau fournit sur l'entrée 25 du soustracteur 24 une tension de consigne Vc.

A noter que sur l'autre entrée 23 de ce soustracteur 24 est appliquée, comme expliqué précédemment, une tension proportionnelle au courant I dans le bobinage 1.

La tension d'erreur en sortie 26 du soustracteur 24 est mise à niveau par l'amplificateur 27, et se retrouve en 28 sous forme de la tension E précitée.

Si cette tension d'erreur E est positive (ce qui est le cas lorsque le moteur linéaire doit être alimenté en courant I dans le but de déplacer le noyau dans une première direction déterminée) :
. la diode 32 est bloquée, de sorte que l'interrupteur de mise à la masse 29 est ouvert, et que la tension E est appliquée à la grille 30 du transistor 14 à travers la résistance 31 ;
. la diode 35 est passante, de sorte que la grille 37 du transistor 17 est pratiquement mise à la masse ;
. la tension d'alimentation +V apparaît sur la sortie 43 de l'amplificateur différentiel 45 et est transmise (du fait que la diode 48 est alors bloquée) à la grille 41 du transistor 6 via la résistance 47 ;
. une tension -V apparaît sur la sortie 44 de l'amplificateur différentiel 49, de sorte que la diode 52 est passante et que la grille 42 du transistor 10 est pratiquement mise à la masse.

Il s'ensuit finalement que le transistor 6 est bloqué, le transistor 10 est saturé et donc totalement passant, le transistor 17 est bloqué, et le transistor 14 est conducteur et fonctionne en régime linéaire avec la tension d'erreur E appliquée sur sa grille 30. Il circule finalement dans le bobinage 1 un courant I instantané proportionnel à la tension d'erreur E, ce courant I étant finalement asservi à la tension de consigne Vc et circulant de l'extrémité 13 vers l'extrémité 9 de la branche 5 du pont de transistors 3.

A contrario, et simplement par raison de symétrie, lorsque la tension d'erreur E est négative, les transistors 14 et 10 sont bloqués, tandis que le transistor 6 est totalement passant et se comporte donc comme un court-circuit, et le transistor 17 fonctionne en régime linéaire, alimenté sur sa grille par la valeur inversée, donc positive, de la tension d'erreur E. Le courant asservi I qui circule alors dans le bobinage 1 a le sens inverse du sens précédent.

Enfin, lorsque la tension d'erreur E est nulle, tous les transistors du pont 3 sont bloqués, de sorte qu'aucun courant ne passe dans le bobinage 1.

Ce dispositif permet finalement d'éviter un échauffement inutile des bobinages 1 du moteur linéaire au repos de celui-ci. Il a en outre l'avantage, du fait qu'il fonctionne sans découpage du courant, d'éviter des problèmes de création de parasites dans les circuits environnants.

Comme il va de soi, l'invention n'est pas limitée à la forme de réalisation décrite ci-dessus. C'est ainsi, par exemple que le dispositif pourrait faire usage de transistors de puissance bipolaires et que le discriminateur de signe et les deux circuits interrupteurs pourraient être réalisés d'autre façon.

## Revendications

1. Dispositif d'excitation électrique d'au moins un bobinage (1) d'un actionneur électromagnétique, apte à entraîner un déplacement dans un sens ou dans l'autre,
ce dispositif comportant un pont (3) de transistors (6,10,14,17) pour alimenter directement ce bobinage (1) dans un sens ou dans l'autre ainsi qu'un dispositif (2,22,24,27) apte à mesurer l'erreur (E) entre une tension de consigne (Vc) représentative du courant à appliquer à ce bobinage (1) et une tension proportionnelle au courant (I) qui le traverse,
caractérisé en ce qu'il est muni de moyens (38,34,33,29) pour :
- lorsque la tension d'erreur (E) est positive, d'une part bloquer une première paire de transistors (6,17) du pont qui si elle conduisait ferait passer le courant (I) dans le bobinage (1) dans un premier sens, d'autre part rendre entièrement passant un des transistors (10) de la seconde paire (10,14) et faire fonctionner en régime sensiblement linéaire l'autre transistor (14) de la seconde paire de manière à ce que le courant traverse les transistors (10,14) de la seconde paire et le bobinage (1) dans un second sens et varie pratiquement linéairement avec cette tension d'erreur (E),
- lorsque la tension d'erreur (E) est négative, d'une part bloquer les transistors (10,14) de la seconde paire, rendre entièrement passant un des transistors (6) de la première paire et faire fonctionner en régime sensiblement linéaire l'autre transistor (17) de la première paire de manière à ce que le courant (I) traverse les transistors (6,17) de la première paire et le bobinage (1) dans le premier sens et varie pratiquement linéairement avec la tension d'erreur (E),
- lorsque la tension d'erreur (E) est nulle bloquer tous les transistors (6,10,14,17) du pont de sorte qu'aucun courant ne passe dans le bobinage (1).

2. Dispositif d'excitation électrique selon la revendication 1, caractérisé en ce que la tension d'erreur (E) est appliquée simultanément :
. à un premier interrupteur électronique (29) qui est connecté entre l'électrode de commande (30) d'un premier transistor (14) de ladite seconde paire (14, 10) du pont (3) et un potentiel (0 volts) de blocage de ce même transistor (14), cet interrupteur (29) étant commandé par le signe de cette tension d'erreur (E) pour être fermé, et alors bloquer ce transistor (14), lorsque cette tension d'erreur (E) est d'un premier signe (-) et pour être ouvert dans le cas contraire afin de permettre à ce même transistor (14) de fonctionner alors en régime sensiblement linéaire ;
. via un inverseur analogique (34), à un deuxième interrupteur électronique (33) analogue au premier (29), ce deuxième interrupteur (33) étant, de la même façon que pour le premier interrupteur (29), connecté entre l'électrode de commande (37) du premier transistor correspondant (17) de la première paire (6, 17) du pont (3) et un potentiel de blocage (0 volts) de ce transistor (17), ce deuxième interrupteur (33) étant commandé par le signe de cette tension d'erreur (E) de façon inverse au premier interrupteur (29), c'est à dire pour être fermé, et alors bloquer ce transistor (17) lorsque cette tension d'erreur (E) est de l'autre signe (+), et pour être ouvert dans le cas contraire afin de permettre à ce même transistor (17) de fonctionner alors en régime sensiblement linéaire ; et
. à un discriminateur de signe (38) qui est commandé par le signe de cette tension d'erreur (E) de manière à appliquer une tension de blocage au deuxième transistor (6 ou 10) qui est associé à la paire de transistors (6, 17 ou 10, 14) dont le premier transistor (17 ou 14) est rendu bloqué par cette tension d'erreur (E), et une tension de saturation au deuxième transistor (10 ou 6) de l'autre paire (10, 14 ou 6, 17).

3. Dispositif d'excitation électrique selon la revendication 2, caractérisé en ce que le discriminateur de signe comporte deux branches indépendantes (43, 44) qui comprennent chacune, en série, un amplificateur différentiel analogique (45, 49) et un interrupteur électronique (46, 50) semblable aux deux interrupteurs électroniques précités (29, 33), la tension d'erreur (E) étant appliqué sur une borne d'entrée d'un premier signe (+) de l'amplificateur différentiel (45) d'une première branche (43), et sur la borne d'entrée de l'autre signe(-) pour l'amplificateur différentiel (49) de la deuxième branche (44), l'autre borne d'entrée de chacun de ces deux amplificateur différentiels (45, 49) étant reliée à la masse.

## Patentansprüche

1. Vorrichtung zur elektrischen Erregung von wenigstens einer Wicklung (1) einer elektromagnetischen Betätigungsvorrichtung, die in der Lage ist, eine Verstellung in der einen oder der anderen Richtung hervorzurufen,
wobei die Vorrichtung eine Brücke (3) von Transistoren (6, 10, 14, 17) aufweist, um die Wicklung (1) direkt in der einen oder der anderen Richtung zu versorgen, sowie eine Vorrichtung (2, 22, 24, 27), die geeignet ist, den Fehler (E) zwischen einer den an diese Wicklung (1) anzulegenden Strom darstellenden Sollspannung (Vc) und einer zu dem durch die Wicklung fließenden Strom (I) proportionalen Spannung zu messen,
dadurch gekennzeichnet, daß sie mit Mitteln (38, 34, 33, 29) versehen ist, um:
- wenn die Fehlerspannung (E) positiv ist, einerseits ein erstes Paar der Transistoren (6, 17) der Brücke zu sperren, das, wenn es leitend wäre, den Strom (I) in einer ersten Richtung durch die Wicklung (1) fließen ließe, und andererseits einen (10) der Transistoren des zweiten Paares (10, 14) vollständig durchlässig zu machen und den anderen Transistor (14) des zweiten Paares in dem im wesentlichen linearen Bereich arbeiten zu lassen, so daß der Strom durch die Transistoren (10, 14) des zweiten Paares und durch die Wicklung (1) in einer zweiten Richtung fließt und sich praktisch linear mit dieser Fehlerspannung (E) verändert,
- wenn die Fehlerspannung (E) negativ ist, einerseits die Transistoren (10, 14) des zweiten Paares zu sperren und einen (6) der Transistoren des ersten Paares vollständig durchlässig zu machen und den anderen Transistor (17) des ersten Paares in dem im wesentlichen linearen Bereich arbeiten zu lassen, so daß der Strom (I) durch die Transistoren (6, 17) des ersten Paares und durch die Wicklung (1) in der ersten Richtung fließt und sich praktisch linear mit der Fehlerspannung (E) verändert,
- wenn die Fehlerspannung (E) Null ist, alle Transistoren (6, 10, 14, 17) der Brücke zu sperren, so daß kein Strom durch die Wicklung (1) fließt.

2. Elektrische Erregungsvorrichtung nach Anspruch 1, dadurch gekennzeichnet, daß die Fehlerspannung (E) gleichzeitig angelegt wird an:
- einen ersten elektronischen Schalter (29), der zwischen der Steuerelektrode (30) eines ersten Transistors (14) des zweiten Paares (14, 10) der Brücke (3) und einem Potential (0 Volt) zum Sperren dieses Transistors (14) angeschlossen ist, wobei der Schalter (29) von dem Vorzeichen dieser Fehlerspannung (E) gesteuert wird, um geschlossen zu sein und damit den Transistor (14) zu sperren, wenn die Fehlerspannung (E) ein erstes Vorzeichen (-) besitzt, und um in dem entgegengesetzten Fall geöffnet zu sein, damit diesem Transistor (14) dann das Arbeiten in dem im wesentlichen linearen Bereich möglich ist;
- einen dem ersten elektronischen Schalter (29) entsprechenden zweiten elektronischen Schalter (33) über einen Analoginvertierer (34), wobei der zweite Schalter (33) in der gleichen Weise wie der erste Schalter (29) zwischen der Steuerelektrode (37) des entsprechenden Transistors (17) des ersten Paares (6, 17) der Brücke (3) und einem Potential (0 Volt) zum Sperren dieses Transistors (17) angeschlossen ist, wobei der zweite Schalter (33) von dem Vorzeichen dieser Fehlerspannung (E) in entgegengesetzter Weise wie der erste Schalter (29) gesteuert wird, so daß er geschlossen ist und damit den Transistor (17) sperrt, wenn die Fehlerspannung (E) das andere Vorzeichen (+) besitzt, und um in dem entgegengesetzten Fall geöffnet zu sein, damit diesem Transistor (17) das Arbeiten in dem im wesentlichen linearen Bereich möglich ist; und
- einen Vorzeichen-Diskriminator (38), der von dem Vorzeichen dieser Fehlerspannung (E) so gesteuert ist, daß eine Sperrspannung an den zweiten Transistor (6 oder 10) des Transistorpaares (6, 17 oder 10, 14) angelegt wird, dessen erster Transistor (17 oder 14) von dieser Fehlerspannung (E) gesperrt ist, sowie eine Sättigungsspannung an den zweiten Transistor (10 oder 6) des anderen Paares (10, 14 oder 6, 17).

3. Elektrische Erregungsvorrichtung nach Anspruch 2, dadurch gekennzeichnet, daß der Vorzeichen-Diskriminator zwei unabhängige Zweige (43, 44) enthält, die jeweils in Reihe einen analogen Differenzverstärker (45, 49) sowie einen elektronischen Schalter (46, 50) enthalten, der den beiden oben genannten elektronischen Schaltern (29, 33) entspricht, wobei die Fehlerspannung (E) an einen Eingangsanschluß eines ersten Vorzeichens (+) des Differenzverstärkers (45) eines ersten Zweiges (43) sowie an den Eingangsanschluß des anderen Vorzeichens (-) des Differenzverstärkers (49) des zweiten Zweiges (44) angelegt wird, wobei der andere Eingangsanschluß jedes dieser beiden Differenzverstärker (45, 49) mit der Masse verbunden ist.

## Claims

1. Device for electrical excitation of at least one winding (1) of an electromagnetic actuator, capable of engendering a displacement in one or the opposite direction,
this device including a bridge (3) of transistors (6, 10, 14, 17) for supplying this winding (1) directly in one or the opposite direction as well as a device (2, 22, 24, 27) capable of measuring the error (E) between a set voltage (Vc) representative of the current to be applied to this winding (1) and a voltage proportional to the current (I) which crosses it,
characterized in that it is furnished with means (38, 34, 33, 29) in order to:
- when the error voltage (E) is positive, on the one hand block a first pair of transistors (6, 17) of the bridge, which pair, if it were conducting, would allow the current (I) to pass through the winding (1) in a first direction, on the other hand render one of the transistors (10) of the second pair (10, 14) fully passing and cause the other transistor (14) of the second pair to operate in a substantially linear regime in such a way that the current crosses the transistors (10, 14) of the second pair and the winding (1) in a second direction and varies almost linearly with this error voltage (E),
- when the error voltage (E) is negative, on the one hand block the transistors (10, 14) of the second pair, render one of the transistors (6) of the first pair fully passing and cause the other transistor (17) of the first pair to operate in a substantially linear regime in such a way that the current (I) crosses the transistors (6, 17) of the first pair and the winding (1) in the first direction and varies almost linearly with the error voltage (E),
- when the error voltage (E) is zero, block all the transistors (6, 10, 14, 17) of the bridge so that no current passes through the winding (1).

2. Device for electrical excitation according to Claim 1, characterized in that the error voltage (E) is applied simultaneously:
. to a first electronic switch (29) which is joined between the control electrode (30) of a first transistor (14) of the said second pair (14, 10) of the bridge (3) and a potential (0 volts) for blocking this same transistor (14), this switch (29) being controlled by the sign of this error voltage (E) such as to be closed, and thus block this transistor (14), when this error voltage (E) has a first sign (-) and such as to be open in the contrary case so as to allow this same transistor (14) then to operate in the substantially linear regime;
. via an analogue invertor (34), to a second electronic switch (33) analogous to the first (29), this second switch (33) being, in the same way as for the first switch (29), joined between the control electrode (37) of the first corresponding transistor (17) of the first pair (6, 17) of the bridge (3) and a blocking potential (0 volts) for this transistor (17), this second switch (33) being controlled by the sign of this error voltage (E) in the inverse manner to the first switch (29), that is to say such as to be closed, and thus block this transistor (17) when this error voltage (E) has the other sign (+), and such as to be open in the contrary case so as to allow this same transistor (17) then to operate in a substantially linear regime; and
. to a sign discriminator (38) which is controlled by the sign of this error voltage (E) in such a way as to apply a blocking voltage to the second transistor (6 or 10) which is associated with the pair of transistors (6, 17 or 10, 14), the first transistor (17 or 14) of which is rendered blocked by this error voltage (E), and a saturation voltage to the second transistor (10 or 6) of the other pair (10, 14 or 6, 17).

3. Device for electrical excitation according to Claim 2, characterized in that the sign discriminator includes two independent branches (43, 44) which each comprise, in series, an analogue differential amplifier (45, 49) and an electronic switch (46, 50) similar to the two aforesaid electronic switches (29, 33), the error voltage (E) being applied to an input terminal of a first sign (+) of the differential amplifier (45) of a first branch (43), and to the input terminal of the other sign (-) for the differential amplifier (49) of the second branch (44), the other input terminal of each of these two differential amplifiers (45, 49) being connected to earth.
